# EUROPEAN PATENT SPECIFICATION

(11) **EP 2 208 425 B1**
(45) Date of publication and mention of the grant of the patent: **27.06.2018**
(21) Application number: 08761570.4
(22) Date of filing: 08.05.2008
(51) Int. Cl.: A23L 17/00

(54) **METHOD FOR PRODUCING A PROCESSED FISH PRODUCT AND RESULTING PROCESSED FISH PRODUCT**
VERFAHREN ZUR HERSTELLUNG EINES FISCHVERARBEITUNGSPRODUKTS UND SO ERHALTENES FISCHVERARBEITUNGSPRODUKT
PROCÉDÉ DE FABRICATION ET DE TRANSFORMATION DE POISSON ET PRODUIT TRANSFORMÉ À BASE DE POISSON

(30) Priority: 08.05.2007 ES 200701233
(43) Date of publication of application: 21.07.2010
(73) Proprietor: Jealsa Rianxeira, S.A., 15930 Boiro La Coruña (ES)
(72) Inventor: DURAN VILA, Salvador, E-15930 Boiro (a Coruña) (ES); LOPEZ OUTEIRAL, José, Carlos, E-15930 Boiro (a Coruña) (ES); SARTAL RODRIGUEZ, Antonio, E-15930 Boiro (a Coruña) (ES)
(74) Representative: Pons Ariño, Angel
(86) International application number: PCT/ES2008/000325
(87) International publication number: WO 2008/135623

(56) References cited:
- EP-A1- 0 826 314
- EP-A1- 0 913 098
- WO-A1-94/23588
- FR-A1- 2 594 007
- JP-A- 54 017 159
- JP-A- 62 025 953
- JP-A- 2001 186 867
- JP-A- 2002 300 864

## Description

### OBJECT OF THE INVENTION

The object of the present invention consists of a method for fish processing and more specifically for tuna processing, resulting in a value-added product with superior organoleptic characteristics that is tastier (juicier) and more digestible than the natural product.

Another object of the invention is the product thus obtained, which is fundamentally based on fish and more specifically tuna. Said product will also serve as a base for the preparation of packaged prepared dishes and canned salads.

### BACKGROUND OF THE INVENTION

At present, one of the most urgent problems faced by global authorities consists of the overexploitation of saltwater fishing, overexploitation that is leading to the near-disappearance of marine species or to the reduction of species with high gastronomic value such as tuna, cod, etc. to alarming levels.

Every year there is a considerable drop in the number of catches of different species despite the fact that fishing techniques are becoming more sophisticated with each passing year, comprising nets that cover an increasingly wider marine fishing area, use of technological means such as satellite images to track fishing banks, etc.

At present there is a growing number of tons of manufactured product with the commercial designation of *Fish Block,* which consists of fish and pieces of fish that are compacted and frozen into parallelepipedic blocks that are subsequently thawed prior to consumption, serving as raw material for the manufacture of fish-based products. Although these blocks are always prepared with frozen fish or mixed fish, they are not processed fish-based products, but rather they are compacted fish of multiple species.

Returning to the subject of natural fish, i.e. unmanufactured, and by way of example, we must mention tuna, which has always been one of the most highly valued catches since ancient times. Different types of fish are grouped under the name "tuna"; some belong to the genus *Thunnus* and are considered real tuna, such as "bluefin tuna" (*Thunnus thynnus*), "yellowfin tuna" (*Thunnus albacares*) and "albacore tuna" (*Thunnus alalunga*), and there are others whose characteristics are considered similar, such as "bullet tuna" or "striped tuna" (*Katsuwonus pelamis*) and other species such as "Atlantic bonito" (*Sarda sarda*).

As a result of massive tuna fishing we have reached the point where its price has risen to prohibitive levels due to the existence of greater demand than supply of said product, a fact which is becoming more accentuated year after year, due to which a tuna-based product is sought, mainly consisting of tuna and also having organoleptic characteristics very superior to those of the natural product, as tuna meat in its natural state is not to everyone's liking due to its strong flavour on the palate, in addition to improving the juiciness of the product itself.

Spanish Patent application P200602241, by the same applicant, protects a method for restoring and/or improving the nutritional and/or sensorial quality of preserved fish, the objective of which is to collect the juice or broth resulting from boiling the fish and subsequently return it to the original product, in order to restore the original nutritional characteristics of the fish.

This method includes boiling the fish, collecting the boiling juice, concentrating the boiling juice, mixing it with parts of fish and water, mincing and filtering it in the liquid phase until a homogeneous gruel is obtained and, finally, adding said gruel to the previously boiled fish, i.e. following a method that restores the organoleptic qualities of boiled fish by collecting and restoring the boiling broth thereof.

Another example of the state of the art can be found on FR2594007.

### DESCRIPTION OF THE INVENTION

The object of the present invention is disclosed in the appended claims and consists of a method for manufacturing processed fish, specifically processed tuna, although it can be of any other fish, which adds value to a scarce product, also giving it a more enhanced and pleasant texture and flavour on the palate, while producing a product that is more easily digested by humans.

Another object of the invention is the processed fish thus obtained, which envisages a mixture of ingredients that give said processed fish a certain flavour, texture and, in short, very advantageous organoleptic conditions with respect to the standard product.

The processed fish manufacturing method envisaged by the invention is based on the production of a restructured product consisting of fish meat or muscle, especially tuna muscle, although it could be of any other fish species.

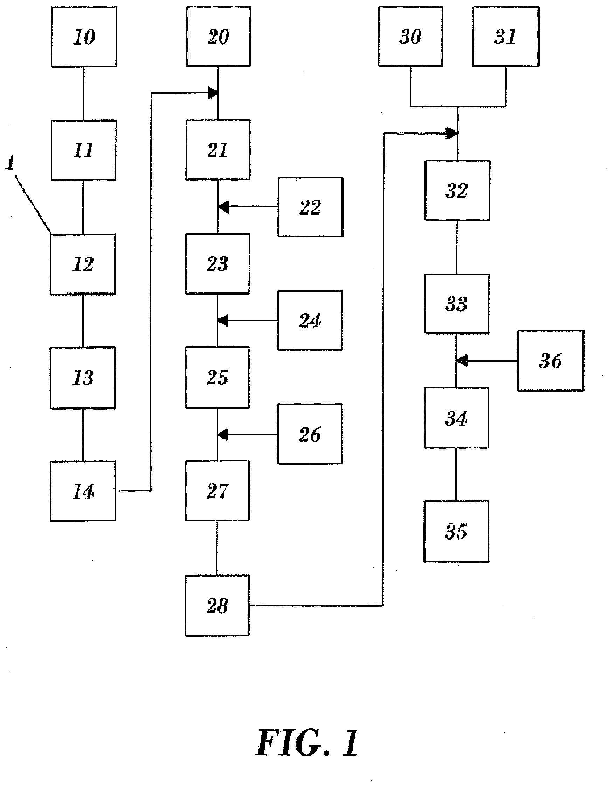

The method proposed by the invention starts by producing a boiled fish broth concentrate. Therefore, in Figure 1 and under reference (1) we can observe the part of the process wherein the fish concentrate is obtained.

The canning industry traditionally uses boiled fish to fill the different containers, prior to undergoing thermal pasteurisation or sterilising treatments. The boiling process raises the temperature of the fish to a programmed value, for a certain period of time, which depends on the size of the fish and its initial temperature, although the end of the boiling process is determined by the internal spinal temperature reached. The higher the spinal temperature the longer the boiling time, and the greater the reduction, which is established in the range of 18% to 20%.

This fish boiling treatment causes loss of the juices of the treated fish. These juices, inherent to the fish, drag away proteins and other highly nutritional elements, such as salts and trace elements of the highest nutritional quality. Their loss also causes a change in texture, resulting in a dry product that is less attractive than the original. The method starts by collecting the juice or broth resulting from boiling the fish, said broth being identified by species, lots and origin according to the traceability protocol applied to boiling processes.

The broth or juice recovered from the boiling process undergoes a concentration phase for the purpose of producing a concentrated broth that can be self-preserved due to the concentration of solids, between 2.5% and 50% of its weight in solids, of which 10% and 40% are salts, sodium chloride and phosphates of organic origin. Optionally, the collected broth or juice can be subjected to a hydrolysis treatment.

The broth obtained can be packaged and stored or can be used immediately to continue the process, depending on the manufacturing method that will be followed.

This phase of the boiling broth concentrate production is an optional phase that can be included or not in the process and therefore is not essential nor forms part of the basic method of the invention. Said method, as mentioned under the section Background of the Invention, is disclosed in Spanish Patent application P200602241 by the same applicant.

The fundamental part of the process starts with frozen raw fish (20) called native protein. This raw fish can be of any species that we wish to process, although in this case and by way of example that will be followed throughout the description, it will be tuna. There are different species of tuna, as there are several species among marine fauna, although for the explanation of this method we will refer to the tuna species commonly referred to as "commercial" which are those that account for the greatest part of global catches, such as:
- Bullet or Striped (*Katsuwomus pelamis*).
- Yellowfin or *rabil* (*Thunnus albacares*).
- Bigeye or *patudo* (*Thunnus obesus*).

Bullet or striped and yellowfin or *rabil* tuna, caught by large seiners in tropical seas, are basically used for light meat tuna preserves. Bigeye or *patudo* tuna, caught by longliners and fishing boats with rod and reel, which ensures better quality of the fish by avoiding crushing during the catch, are mainly used for the production of sashimi by the Japanese market and those of other industrialised countries.

This frozen raw fish (20) forms the base of the gruel that will be produced, for which purpose it is introduced into a vacuum cutter (21) where said raw fish is mixed together with the final product (14) resulting from the boiling broth concentrate; optionally and subsequently, as mentioned below, the different ingredients will be gradually introduced in the same manner in the described order for the purpose of making a homogeneous paste based on frozen raw fish. As proposed herein, if the broth concentrate is used at this stage we must ensure that the boiling lots are of exactly the same species as the raw meat used.

The proportion of frozen raw fish (20) with respect to the product mixed in the cutter shall not be greater than 60%, preferably not greater than 50% and, more suitably, not greater than 40% by weight of the total mixture prepared. This process will produce a homogeneous emulsion working at temperatures of below 0ºC as it takes advantage of the temperature at which the raw fish is introduced, preferably at a working temperature of around -20ºC below zero. The processing time shall be defined by the final texture of the gruel and shall be considered optimal when there are no remaining pieces in the gruel obtained.

Once this homogeneous mixture has been obtained, a series of products are added, such as approved food additives. In the case of the present invention these will be phosphates which, acting as a technological adjuvant, act as emulsifiers that enable the formation or maintenance of a homogeneous mixture (23).

Next, water (24) in the form of ice is added in order to continue maintaining the temperatures below 0ºC, despite carrying out thermal work, and the components are homogeneously mixed and, finally, vegetable oils or fats (26) are added, among which we can mention, by way of example, olive oil, sunflower oil, oleic-rich sunflower oil, any other vegetable oil or combinations thereof, until an emulsion (27) is obtained which is characterised in that it is always maintained at temperatures below 0ºC, for which the temperature of the original frozen raw fish and the water in the form of ice added will have served or, if this were insufficient, external means that maintain the temperature required to produce the emulsion would be used.

At this stage of the process, sauces of different kinds can also be added to the mixture, fully or partially substituting the oils (by way of example: fine sauce, mustard, tomato sauce, etc.).

This emulsion (27) is turned into a homogeneous gruel that is worked in the vacuum cutter mixer and to which other additives can be added, such as antioxidants, that will limit gruel oxidation. These antioxidant additives shall be suitable for human food consumption.

If the resulting mixture is pale in colour, small percentages of red muscle or dark meat (*Sangacho*), which is the part of the tuna loin that has a very intense reddish colour, will be added. With the addition of an appropriate amount of dark meat we will obtain a final gruel (28) with the suitable colour, which is not substantially different from the boiled fish flakes that are subsequently mixed, and having ideal organoleptic characteristics for consumption, as it also acts as a flavour enhancer.

As a result of all these sub-stages, a semi-solid gruel is obtained which will act as a binder for the boiled fish flakes that will become the basis of the final mixture in the final -restructured- product that is the ultimate object of this invention.

As mentioned earlier, this final gruel (28) shall be mixed with fish flakes (30) and/or with previously boiled pieces of fish (31), following the traditional process for the preparation of fish and shellfish preserves, in a proportion no higher than 70% of final gruel and preferably accounting for close to 60-65% of the final product, which undergoes homogeneous mixing (32), seeking a grain size that will depend on the desired final appearance of the product and the suitable bite. A high grain size will have a larger amount of bite but will display a greater contrast with the gruel. As particle size decreases one aspect is favoured to the detriment of the other, due to which it will be necessary to establish values in order to optimise both objectives sought in each case.

This mixture thus generated (gruel and boiled fish flakes) form a single homogeneous dough that is distributed homogeneously (33) by means of stuffing into paraffined boxes which are in turn introduced into metal moulds to give them the appropriate shape for shipping this moulded paste or mixture.

These fish blocks (35) are not yet suitable for human consumption as part of the fish is still raw (20) and the protein has not developed its potential as a structuring element of the mixture, due to which it will be necessary to apply thermal treatment of some kind, whether pasteurisation of sterilisation.

At this stage, and after having prepared the base product, we can choose between different alternatives for the final use and/or presentation of the product.

In the case of the invention, we will describe the process followed for freezing and subsequent sterilisation inside the container.

In this manner, the product is frozen (34) in cabinets with plates of the moulds obtained, generating what is known as "Fish Blocks" (35), which are parallelepipeds with fixed dimensions made of reconstituted fish in the case of the present invention, that are subsequently subjected to a sterilisation process inside the appropriate container, in this case Tetra Recart®.

Other alternatives to that previously described include direct dosing into cans in semi-solid state using a stuffer and subsequent sterilisation in the case of preserves or pasteurisation in the case of semi-preserves.

In both cases the organoleptic characteristics of the product thus obtained for consumers are superior even to those of tuna, resulting in a tastier, more digestible product, the appearance of which has a very pleasant colour and texture for consumers.

## Claims

1. Method for manufacturing processed fish that comprises the mixing of an emulsified, homogeneous fish-based gruel, with flakes and/or pieces of fish, until a homogeneous mixture is formed,
wherein the preparation of the emulsified, homogeneous fish-based gruel is comprised of the following phases:
- mixing of frozen raw fish with broth concentrate until an emulsion is formed in a cutter mixer;
- addition of water in the frozen state; and
- addition of vegetable oils or fats;
and wherein the frozen raw fish and the broth concentrate are from the same kind of fish.

2. Method for manufacturing processed fish, according to claim 1, **characterised in that** the proportion of gruel with respect to the flakes and/or pieces of fish is approximately 50%.

3. Method for manufacturing processed fish, according to claim 1, **characterised in that** the proportion of gruel with respect to the flakes and/or pieces of fish is approximately 60%.

4. Method for manufacturing processed fish, according to claim 1, **characterised in that** the homogeneous mixture is stuffed into moulds that give shape to the homogeneous mixture, which is thermally treated and frozen, producing frozen blocks of processed fish.

5. Method for manufacturing processed fish, according to claim 1, **characterised in that** food additives may be added during the preparation of the homogeneous gruel.

6. Method for manufacturing processed fish, according to claim 5, **characterised in that** the food additives are emulsifying substances such as phosphates and antioxidant substances.

7. Method for manufacturing processed fish, according to claim 1, **characterised in that** red muscle or dark meat is added to the emulsified, homogeneous fish-based gruel to give it a more intense colour.

8. Method for manufacturing processed fish, according to claim 1, **characterised in that** the proportion of frozen raw fish with respect to the final gruel obtained is equal to or less than 60%.

9. Method for manufacturing processed fish, according to claim 1, **characterised in that** the proportion of frozen raw fish with respect to the final gruel obtained is equal to or less than 50%.

10. Method for manufacturing processed fish, according to claim 1, **characterised in that** the proportion of frozen raw fish with respect to the final gruel obtained is equal to or less than 40%.

11. Method for manufacturing processed fish, according to claim 1, **characterised in that** the vegetable oils or fats used are sunflower oil and/or olive oil.

12. Method for manufacturing processed fish, according to claim 1, **characterised in that** the gruel is prepared in a cutter mixer that achieves a homogeneous paste and emulsion thereof, working in a vacuum and at temperatures equal to or below 0ºC.

13. Method for manufacturing processed fish, according to claim 1, **characterised in that** the vegetable oil or fat added can be fully or partially substituted by sauces of different kinds.

14. Processed fish obtainable by the method described in any of claims 1-13, **characterized in that** it comprises a homogeneous gruel consisting of fish and flakes and/or pieces of fish.

15. Processed fish, according to claim 14, **characterised in that** the proportion of gruel with respect to the flakes and/or pieces of fish is approximately 50%.

16. Processed fish, according to claim 14, **characterised in that** the proportion of gruel with respect to the flakes and/or pieces of fish is approximately 60%.

17. Processed fish, according to claim 14, **characterised in that** the homogeneous fish-based gruel is comprised of a frozen raw fish emulsion with broth concentrate, frozen water and vegetable oils or fats.

18. Processed fish, according to claim 17, **characterised in that** the vegetable oils or fats can be fully or partially substituted by sauces of different kinds.

19. Processed fish, according to claim 17, **characterised in that** the homogeneous fish-based gruel is concentrated and thermally treated.

20. Processed fish, according to claim 17, **characterised in that** the homogeneous fish-based gruel comprises food additives.

21. Processed fish, according to claim 20, **characterised in that** the food additives are emulsifying substances such as phosphates and antioxidant substances.

22. Processed fish, according to claim 17, **characterised in that** the homogeneous fish-based gruel includes small percentages of red muscle or dark meat to intensify its colour and/or flavour.

23. Processed fish, according to claim 17, **characterised in that** the vegetable oils or fats used are sunflower oil and/or olive oil.

## Patentansprüche

1. Verfahren zur Herstellung von verarbeitetem Fisch, das das Gemisch eines emulgierten, homogenen Breis auf Fischbasis mit Fischflocken oder - stücken umfasst, bis ein homogenes Gemisch gebildet wird, wobei die Zubereitung des emulgierten, homogenen Breis auf Fischbasis die folgenden Schritte umfasst:
- Mischen des gefrorenen rohen Fisches mit Brühekonzentrat, bis eine Emulsion in einem Schneidmischer gebildet ist;
- Hinzugeben von Wasser in gefrorenem Zustand; und
- Hinzugeben von pflanzlichen Ölen oder Fetten;
und wobei der gefrorene rohe Fisch und das Brühekonzentrat aus der gleichen Art von Fisch hergestellt sind.

2. Verfahren zur Herstellung von verarbeitetem Fisch nach Anspruch 1, **dadurch gekennzeichnet, dass** der Anteil von Brei bezüglich der Fischflocken und/oder -stücke etwa 50 % beträgt.

3. Verfahren zur Herstellung von verarbeitetem Fisch nach Anspruch 1, **dadurch gekennzeichnet, dass** der Anteil von Brei bezüglich der Fischflocken und/oder -stücke etwa 60 % beträgt.

4. Verfahren zur Herstellung von verarbeitetem Fisch nach Anspruch 1, **dadurch gekennzeichnet, dass** das homogene Gemisch in Formen gefüllt wird, die dem homogenen Gemisch Form geben, das thermisch behandelt und gefroren wird, wodurch gefrorene Blöcke aus verarbeitetem Fisch hergestellt werden.

5. Verfahren zur Herstellung von verarbeitetem Fisch nach Anspruch 1, **dadurch gekennzeichnet, dass** Lebensmittelzusatzstoffe während der Zubereitung des homogenen Breis hinzugegeben werden können.

6. Verfahren zur Herstellung von verarbeitetem Fisch nach Anspruch 5, **dadurch gekennzeichnet, dass** die Lebensmittelzusatzstoffe Emulgatoren, wie Phosphate und Antioxidationsmittel sind.

7. Verfahren zur Herstellung von verarbeitetem Fisch nach Anspruch 1, **dadurch gekennzeichnet, dass** rote Muskeln und dunkles Fleisch zu dem emulgierten, homogenen Brei auf Fischbasis hinzugegeben werden, um ihm eine intensivere Farbe zu geben.

8. Verfahren zur Herstellung von verarbeitetem Fisch nach Anspruch 1, **dadurch gekennzeichnet, dass** der Anteil von gefrorenem rohem Fisch bezüglich des erhaltenen Endbreis gleich oder weniger als 60 % ist.

9. Verfahren zur Herstellung von verarbeitetem Fisch nach Anspruch 1, **dadurch gekennzeichnet, dass** der Anteil von gefrorenem rohem Fisch bezüglich des erhaltenen Endbreis gleich oder weniger als 50 % ist.

10. Verfahren zur Herstellung von verarbeitetem Fisch nach Anspruch 1, **dadurch gekennzeichnet, dass** der Anteil von gefrorenem rohem Fisch bezüglich des erhaltenen Endbreis gleich oder weniger als 40 % ist.

11. Verfahren zur Herstellung von verarbeitetem Fisch nach Anspruch 1, **dadurch gekennzeichnet, dass** die verwendeten pflanzlichen Öle oder Fette Sonnenblumenöl und/oder Olivenöl sind.

12. Verfahren zur Herstellung von verarbeitetem Fisch nach Anspruch 1, **dadurch gekennzeichnet, dass** der Brei in einem Schneidmischer zubereitet wird, der eine homogene Paste und Emulsion davon erreicht, wobei er in einem Vakuum und bei Temperaturen gleich oder weniger als 0 ºC arbeitet.

13. Verfahren zur Herstellung von verarbeitetem Fisch nach Anspruch 1, **dadurch gekennzeichnet, dass** das hinzugegebene pflanzliche Öl oder Fett ganz oder teilweise durch Soßen verschiedener Art ersetzt werden kann.

14. Verarbeiteter Fisch, der durch das in einem der Ansprüche 1 bis 13 beschriebene Verfahren erhalten werden kann, **dadurch gekennzeichnet, dass** es einen homogenen Brei umfasst, der aus Fisch und Fischflocken und/oder - stücken besteht.

15. Verarbeiteter Fisch nach Anspruch 14, **dadurch gekennzeichnet, dass** der Anteil des Breis bezüglich der Fischflocken und/oder -stücke etwa 50 % beträgt.

16. Verarbeiteter Fisch nach Anspruch 14, **dadurch gekennzeichnet, dass** der Anteil des Breis bezüglich der Fischflocken und/oder -stücke etwa 60 % beträgt.

17. Verarbeiteter Fisch nach Anspruch 14, **dadurch gekennzeichnet, dass** der homogene Brei auf Fischbasis eine Emulsion aus gefrorenem rohem Fisch mit Brühekonzentrat, gefrorenem Wasser und pflanzlichen Ölen oder Fetten umfasst.

18. Verarbeiteter Fisch nach Anspruch 17, **dadurch gekennzeichnet, dass** die pflanzlichen Öle oder Fette ganz oder teilweise durch Soßen verschiedener Art ersetzt werden können.

19. Verarbeiteter Fisch nach Anspruch 17, **dadurch gekennzeichnet, dass** der homogene Brei auf Fischbasis konzentriert und thermisch behandelt ist.

20. Verarbeiteter Fisch nach Anspruch 17, **dadurch gekennzeichnet, dass** der homogene Brei auf Fischbasis Lebensmittelzusatzstoffe umfasst.

21. Verarbeiteter Fisch nach Anspruch 20, **dadurch gekennzeichnet, dass** die Lebensmittelzusatzstoffe Emulgatoren, wie Phosphate und Antioxidationsmittel sind.

22. Verarbeiteter Fisch nach Anspruch 17, **dadurch gekennzeichnet, dass** der homogene Brei auf Fischbasis kleine Anteile von roten Muskeln oder dunklem Fleisch einschließt, um die Farbe und/oder den Geschmack zu intensivieren.

23. Verarbeiteter Fisch nach Anspruch 17, **dadurch gekennzeichnet, dass** die verwendeten pflanzlichen Öle oder Fette Sonnenblumenöl und/oder Olivenöl sind.

## Revendications

1. Procédé pour l'élaboration de poisson transformé qui comprend le mélange d'un gruau à base de poisson émulsifié, homogène, avec des flocons et/ou pièces de poisson, jusqu'à ce qu'un mélange homogène soit formé,
dans lequel la préparation du gruau à base de poisson émulsifié, homogène est constituée des phases suivantes :
- le mélange de poisson cru congelé avec un concentré de bouillon jusqu'à ce qu'une émulsion soit formée dans un mixeur cutter ;
- ajout d'eau à l'état congelé ; et
- ajout d'huiles ou graisses végétales ;
et dans lequel le poisson cru congelé et le concentré de bouillon proviennent du même type de poisson.

2. Procédé pour l'élaboration de poisson transformé, selon la revendication 1, **caractérisé en ce que** le pourcentage de gruau par rapport aux flocons et/ou pièces de poisson est de 50 % approximativement.

3. Procédé pour l'élaboration de poisson transformé, selon la revendication 1, **caractérisé en ce que** le pourcentage de gruau par rapport aux flocons et/ou pièces de poisson est de 60% approximativement.

4. Procédé pour l'élaboration de poisson transformé, selon la revendication 1, **caractérisé en ce que** le mélange homogène est introduit dans des moules qui donnent forme au mélange homogène, qui est thermiquement traité et congelé, produisant des blocs congelés de poisson transformé.

5. Procédé pour l'élaboration de poisson transformé, selon la revendication 1, **caractérisé en ce que** les additifs alimentaires peuvent être ajoutés pendant la préparation du gruau homogène.

6. Procédé pour l'élaboration de poisson transformé, selon la revendication 5, **caractérisé en ce que** les additifs alimentaires sont des substances émulsifiantes telles que les phosphates et les substances antioxydantes.

7. Procédé pour l'élaboration de poisson transformé, selon la revendication 1, **caractérisé en ce que** le muscle rouge ou la viande brune est ajouté au gruau à base de poisson émulsifié, homogène pour lui donner une couleur plus intense.

8. Procédé pour l'élaboration de poisson transformé, selon la revendication 1, **caractérisé en ce que** le pourcentage de poisson cru congelé par rapport au gruau final obtenu est égal ou inférieur à 60 %.

9. Procédé pour l'élaboration de poisson transformé, selon la revendication 1, **caractérisé en ce que** le pourcentage de poisson cru congelé par rapport au gruau final obtenu est égal ou inférieur à 50%.

10. Procédé pour l'élaboration de poisson transformé, selon la revendication 1, **caractérisé en ce que** le pourcentage de poisson cru congelé par rapport au gruau final obtenu est égal ou inférieur à 40%.

11. Procédé pour l'élaboration de poisson transformé, selon la revendication 1, **caractérisé en ce que** les huiles ou graisses végétales utilisées sont l'huile de tournesol et/ou l'huile d'olive.

12. Procédé pour l'élaboration de poisson transformé, selon la revendication 1, **caractérisé en ce que** le gruau est préparé dans un mixeur cutter qui obtient une pâte homogène et une émulsion de ce dernier, fonctionnant sous vide et à des températures égales ou en dessous de 0 ºC.

13. Procédé pour l'élaboration de poisson transformé, selon la revendication 1, **caractérisé en ce que** l'huile ou graisse végétale ajoutée peut être entièrement ou partiellement remplacée par des sauces de différentes sortes.

14. Poisson transformé pouvant être obtenu par le procédé décrit dans l'une quelconque des revendications 1-13, **caractérisé en ce qu'**il comprend un gruau homogène consistant en poisson et flocons et/ou pièces de poisson.

15. Poisson transformé, selon la revendication 14, **caractérisé en ce que** le pourcentage de gruau par rapport aux flocons et/ou pièces de poisson est de 50 % approximativement.

16. Poisson transformé, selon la revendication 14, **caractérisé en ce que** le pourcentage de gruau par rapport aux flocons et/ou pièces de poisson est de 60% approximativement.

17. Poisson transformé, selon la revendication 14, **caractérisé en ce que** le gruau à base de poisson homogène est constitué d'une émulsion de poisson cru congelé avec un concentré de bouillon, d'eau congelée et d'huiles ou graisses végétales.

18. Poisson transformé, selon la revendication 17, **caractérisé en ce que** les huiles ou graisses végétales peuvent être entièrement ou partiellement remplacées par des sauces de différentes sortes.

19. Poisson transformé, selon la revendication 17, **caractérisé en ce que** le gruau à base de poisson homogène est concentré et traité thermiquement.

20. Poisson transformé, selon la revendication 17, **caractérisé en ce que** le gruau à base de poisson homogène comprend des additifs alimentaires.

21. Poisson transformé, selon la revendication 20, **caractérisé en ce que** les additifs alimentaires sont des substances émulsifiantes telles que les phosphates et les substances antioxydantes.

22. Poisson transformé, selon la revendication 17, **caractérisé en ce que** le gruau à base de poisson homogène comporte des pourcentages faibles de muscle rouge ou de viande brune pour intensifier sa couleur et/ou saveur.

23. Poisson transformé, selon la revendication 17, **caractérisé en ce que** les huiles ou graisses végétales utilisées sont l'huile de tournesol et/ou l'huile d'olive.
